# EUROPÄISCHE PATENTSCHRIFT

(11) **EP 0 406 681 B1**
(45) Veröffentlichungstag und Bekanntmachung des Hinweises auf die Patenterteilung: **20.11.1996**
(21) Anmeldenummer: 90112215.0
(22) Anmeldetag: 27.06.1990
(51) Int. Cl.: B32B 27/08

(54) **Siegelfähige Kunststoff-Folie**
Sealable plastic foil
Feuille plastique scellable

(30) Priorität: 01.07.1989 DE 3921677
(43) Veröffentlichungstag der Anmeldung: 09.01.1991
(73) Patentinhaber: BASF Aktiengesellschaft, 67063 Ludwigshafen (DE)
(72) Erfinder: Jenne, Helmut, Dr., D-6905 Schriesheim (DE)

(56) Entgegenhaltungen:
- DE-A- 2 734 294
- DE-A- 3 531 036

## Beschreibung

Die Erfindung betrifft eine hießsiegelfähige Kunststoff-Folie mit einer siegelfähigen Schicht aus einem thermoplastischen Polystyrolharz.

Kunststoffbehälter für die Verpackung von Lebensmitteln müssen in vielen Fällen luftdicht verschlossen werden, um deren Haltbarkeit sicherzustellen. Als Verschluß werden in vielen Fällen, insbesondere bei der Verpackung von Molkereiprodukten, Aluminiumfolien verwendet, auf die ein Siegellack aufgetragen wird, der eine ausreichende Haftung auf den verschiedenen Arten von Kunststoffbehältern sicherstellt. Da Aluminium unempfindlich gegenüber Temperatureinflüssen ist, kann der Siegelvorgang bei beliebigen Temperaturen durchgeführt werden. Es ist lediglich darauf zu achten, daß die Siegelung so beschaffen ist, daß einerseits das Behältnis fest genug verschlossen ist, also z.B. beim Herabfallen des gefüllten Behälters nicht aufplatzt, andererseits aber der Verschluß auch noch leicht von Hand zu öffnen ist, so daß die Folie nicht zerreißt. Dabei ist von Bedeutung, daß die Siegelung über einen gewissen Verarbeitungsbereich, wie er von den handelsüblichen Verschließanlagen gefordert wird, diese Festigkeitsanforderung erfüllt.

Außer Aluminiumfolien werden auch Kunststoff-Folien verwendet, die mit einem siegelfähigen Lack versehen werden. Je nach der Art des Kunststoffes, aus dem der zu siegelnde Behälter hergestellt ist, verwendet man entsprechende Siegellacke. So bringt man z.B. auf die derzeit für diesen Zweck am meisten verwendeten siegelfähigen Folien aus Hart-PVC eine Siegellackschicht auf Basis eines Acrylatharzes auf, dem zur Regulierung der Haftfestigkeit und des Aufschmelzpunktes noch Zusatzstoffe beigegeben werden.

Die siegelfähigen Kunststoff-Folien können im Gegensatz zu den Aluminiumfolien auch thermogeformt werden. So ist es möglich, bei Verwendung von Kunststoff-Folien daraus geformte Deckel herzustellen, die ebenfalls auf das zu verschließende Behältnis aufgesiegelt werden, die aber nach Öffnen der Verpackung geeignet sind, diese wieder nach Entnahme eines Teiles des Inhaltes zu weiteren Aufbewahrung zu verschließen.

Die derzeit verwendeten siegelfähigen Folien aus PVC haben jedoch einige Nachteile: Sie sind, da sie mit einem Siegellack zu versehen sind, verhältnismäßig teuer. Zudem sind die von der Siegelschicht herrührenden Restlösungsmittel aus dem Kunststoff nur mit erheblichem Aufwand zu entfernen. Dazu kommt, daß aus Gründen des Umweltschutzes zunehmend die Neigung besteht, PVC für Wegwerfverpackungen durch andere Thermoplaste zu ersetzen.

In der auf den Erfinder zurückgehenden DE-A-35 31 036 werden nach dem Koextrusionsverfahren herstellbare Kunststoff-Folien beschrieben, die eine siegelfähige Schicht aus einer Mischung von schlagzähem Polystyrol, einem Blockcopolymerisat und einem Gleitmittel sowie eine Trägerfolie aus z.B. Styrol-Butadien-Blockcopolymeren aufweisen.

Bekannt sind auch Folien aus amorphem Polyethylenterephtalat, auf die eine heißsiegelfähige Lackschicht aufgebracht wurde. All diese siegelfähigen Kunststoff-Folien müssen zum Siegelgerät hin mit einer dünnen Schicht eines thermisch stabilen Schutzlackes versehen werden, um ein Kleben der Kunststoff-Folie an den Siegelbacken zu vermeiden.

Bei der Verwendung aller heißsiegelfähigen Kunststoff-Folien hat sich gezeigt, daß sie, verglichen mit den Aluminiumfolien eine wesentlich engere Verarbeitungsbreite haben: Sind nämlich Siegeltemperatur und Siegelzeit zu niedrig, so erlaubt die Kunststoff-Folie keinen ausreichenden Wärmedurchgang und die Folie haftet nicht. Stellt man Siegeltemperatur und -zeit aber zu hoch ein, so schmilzt die Kunststoff-Folie auf und fließt unter dem zur Siegelung notwendigen Druck weg. Sie wird dann im Siegelbereich so dünn, daß sie schon bei geringer Belastung reißt und ein einwandfreies Öffnen und Wiederverschließen der Verpackung nicht mehr möglich ist. Zwischen diesen beiden Grenzbedingungen der Siegelung besteht bei all diesen siegelfähigen Kunststoff-Folien meist nur ein enger Bereich von 10 bis 20°C, der sicher eingehalten werden muß, um eine störungsfreie Produktion und einen einwandfreien Gebrauch der versiegelten Verpackung sicherzustellen. Die Praxis hat gezeigt, daß dies in einer Reihe von Fällen möglich ist; besonders bei Abfüllanlagen, bei denen gleichzeitig mehrere Becher versiegelt werden, ist aber eine ausreichend sichere Temperaturregelung nicht immer gewährleistet, da Temperaturunterschiede von 20°C und mehr zwischen den verschiedenen Kavitäten keine Ausnahme sind.

Es besteht daher die Aufgabe, eine heißsiegelfähige Kunststoff-Folie zu entwickeln, die als Siegelschicht eine Formmasse entsprechend der DE-A 35 31 036 enthält, d.h. die nach dem Verfahren der Koextrusion hergestellt werden kann und deren Siegelschicht somit frei von Lösungsmitteln ist, bei der aber durch andere Maßnahmen die Verarbeitungsbreite und damit die Verarbeitungssicherheit wesentlich erhöht wird. Zudem sollen solche Folien z.B. die Forderung erfüllen, daß sie auch auf Abfüllanlagen, bei denen auf mehreren Kavitäten gleichzeitig gefüllte Becher versiegelt werden, eine einwandfreie Produktion ermöglichen. Das bedeutet - da der Temperaturbereich der Verarbeitung wegen der geringen Wärmeleitfähigkeit der Kunststoff-Folien nach unten nicht erweitert werden kann - daß durch geeignete Maßnahmen erreicht werden muß, daß auch bei höheren Siegeltemperaturen noch eine einwandfreie Versiegelung und auch ein problemloses Verhalten der versiegelten Verpackung im Gebrauch sichergestellt wird.

Ein weiterer Nachteil der erwähnten, derzeit verwendeten siegelfähigen Kunststoff-Folien ist die Notwendigkeit, durch Aufbringen eines Schutzlackes das Kleben der Kunststoff-Folie an den Siegelbacken zu verhindern. Dies bedingt, daß die Folie eine Lackieranlage durchlaufen muß und stellt einen wesentlichen Kostenfaktor dar. So war es ein weiteres Ziel der Erfindung, eine siegelfähige Folie nach dem Verfahren der Koextrusion herzustellen, bei der jeder weitere nachträgliche Lackierschritt entfällt, d.h. die fertigen siegelfähigen Deckel lediglich bei Bedarf noch bedruckt werden müssen.

Es wurde nun gefunden, daß die nach der DE-A 35 31 036 hergestellten siegelfähigen Kunststoff-Folien diese Anforderungen in ausgezeichneter Weise erfüllen, wenn sie mit einer dünnen Deckschicht eines Kunststoffes mit hoher Schmelztemperatur versehen werden.

Unmittelbarer Erfindungsgegenstand ist eine siegelfähige Kunststoff-Folie, hergestellt nach dem Koextrusionsverfahren oder durch Kaschieren, enthaltend bevorzugt 3 Schichten A, B und C, mindestens aber 2 Schichten A und C und gegebenenfalls mindestens eine weitere Schicht einer Haftvermittlers D, die die Verbindung von jeweils zweien der Schichten A, B und C gewährleisten soll wobei die Summe aus A, gegebenenfalls B und C sich auf Stärke oder Gewicht beziehen kann und jeweils 100 ist, und die besteht aus 1 bis 50 % einer Schicht aus einem heißsiegelfähigen schlagzähen Polystyrol A, bis zu 95 % einer Trägerschicht B und 1 bis 99 % einer oberhalb von 200°C schmelzenden Kunststoffschicht C.

Das Aufbringen der hochschmelzenden Schicht C kann wie gesagt durch Kaschieren oder nach dem Verfahren der Koextrusion in einem Arbeitsgang mit der Herstellung der siegelfähigen Kunststoff-Folie geschehen. Dadurch vermeidet man das Anbringen eines Schutzlackes in einem nachfolgenden Arbeitsgang, und es hat sich in einer zunächst unerwarteten Weise gezeigt, daß eine solche Kunststoffschicht auch das Wegfließen der niedriger schmelzenden Hauptschicht der siegelfähigen Kunststoff-Folie bei selbst sehr hohen Siegeltemperaturen vermeidet, im Gegensatz zu dem derzeitigen Verfahren, bei dem ein Schutzlack aufgebracht werden wird.

Damit wird erreicht, daß diese erfindungsgemäßen siegelfähigen Kunststoff-Folien praktisch in derselben Weise und auf denselben Abfüllanlagen angewendet werden können wie die siegelfähigen Aluminiumfolien, ohne daß langwierige Veränderungen an den Abfüllanlagen notwendig sind. Damit werden die wesentlichen Hindernisse für die Breite der Anwendung solcher siegelfähiger Kunststoff-Folien in der Praxis beseitigt. Die Vorteile der nach diesem Verfahren hergestellten gegenüber den bisher verwendeten Kunststoff-Folien sind somit deren unproblematische Verarbeitung und Anwendung und das Vermeiden des nachträglichen Auftragens eines Siegellacks und das Vermeiden von schwer zu beseitigenden Lösungsmitteln. Die Vorteile gegenüber den siegelfähigen Aluminiumfolien sind der weit niedrigere Energieverbrauch für die Herstellung, die Möglichkeit des Wiederverschließens angebrauchter Verpackungen mittels thermogeformter, siegelfähiger Kunststoffdeckel, das bessere Druckbild und das Vermeiden von Lösungsmitteln, so daß deren Entfernen entfallen kann.

Gegebenenfalls ist es jedoch notwendig, die Bedruckung mit einem Schutzlack im Siegelbereich zu schützen. Auch kann es sein, besonders bei zusätzlichen Kunststoffschichten mit einem Schmelpunkt unter 250°C durch einen solchen Lack die Verarbeitungsbreite noch weiter verbessern.

Am Aufbau der erfindungsgemäßen Kunststoff-Folie sind die Komponenten A, ggf. B und C beteiligt. Vorzugsweise besteht sie aus 3 Komponenten, und zwar in folgenden Anteilen, bezogen auf die Stärke oder das Gewicht der Kunststoff-Folie aus A, B und C:
- Komponente A:: 1 bis 50 %, vorzugsweise 3 bis 30 % und insbesondere 3 bis 15 %
- Komponente B:: bis 95 %, vorzugsweise 50 bis 90 % und insbesondere 60 bis 90 %
- Komponente C:: 1 bis 99 %, vorzugsweise 1 bis 30 % und insbesondere 5 bis 15 %

Die Kunststoff-Folie kann zusätzlich noch Haftvermittler D enthalten, die die die feste Verbindung der Schichten A, B und C untereinander sicherstellen; ihre Menge ist gegenüber der Materialmenge aus A, B und C nur gering.

Als Komponenten A, ggf. B, C sowie ggf. Haftvermittler D der erfindungsgemäßen Kunststoff-Folie können jeweils für sich bekannte Materialien verwendet werden, die i.a. auch im Handel erhältlich sind.

### Komponente A

Die Komponente A zum Aufbau der erfindungsgemäßen Kunststoff-Folie hat insbesondere die Eigenschaft, heißsiegelfähig zu sein. Sie findet daher Verwendung im weitesten Sinne bei der Herstellung von Verbunden mit einem Träger, insbesondere einer Trägerfolie.

Als Komponente A zum Aufbau der erfindungsgemäßen Kunststoff-Folie kommen z.B. vor allem Formmassen in Betracht, wie sie in der DE-A-35 31 036 beschrieben sind. Diese Formmassen sind abgesehen von Zusatzstoffen wie Stabilisatoren, aus 3 Bestandteilen aufgebaut; der wesentliche Bestandteil (Komponente A1) ist schlagfestes Polystyrol (darunter ist zweiphasiges, aus Hartmatrix und einer Weichphase aufgebautes Polystyrol zu verstehen).

Die Hartmatrix der Komponente A1 besteht aus einem Styrol-Polymeren. Diese Hartmatrix macht, bezogen auf die Komponente A, 60 bis 95 Gew.-%, vorzugsweise 80 bis 95 Gew.-% aus. Als Monomeres zum Aufbau der Hartmatrix kommt insbesondere Styrol in Frage. Es können jedoch auch α-Methylstyrol oder p-Methylstyrol oder Mischungen substituierter Styrole verwendet werden, bevorzugt ist jedoch die ausschließliche Verwendung von Styrol, so daß die Hartmatrix bevorzugt aus Polystyrol besteht.

Die Hartmatrix entsteht in an sich bekannter Weise bei der Herstellung der Komponente A dadurch, daß eine Weichphase, d.h. ein Kautschuk, z.B. ein Polydien oder ein lineares Zweiblockcopolymerisat aus Dien oder Gemische zusammen mit dem die Hartmatrix später aufbauenden Styrol-Monomeren thermisch oder radikalisch polymerisiert wird. Dabei bilden sich Pfropfmischpolymerisate des Kautschuks (Weichphase) und ungepfropfte Styrol-Polymere, die Hartmatrix.

Die Hartmatrix kann eine Viskositätszahl ηₛₚ/c im Bereich von 50 bis 140, insbesondere im Bereich von 70 bis 120, aufweisen. Dies entspricht mittleren Molgewichten (M_{w}) im Bereich von 100.000 bis 350.000, insbesondere 150.000 bis 300.000.

Die Weichphase liegt im Endergebnis fein dispergiert in der Hartmatrix vor. Die Art und Weise, wie eine Weichphase in einer Hartmatrix dispergiert werden kann, ist bekannt. Die Weichphase ist in einem Anteil von 5 bis 40 Gew.-%, vorzugsweise von 5 bis 20 Gew.-%, in der Hartmatrix vorhanden. Sie weist eine mittlere Teilchengröße im Bereich von 0,01 bis 10 µm, vorzugsweise im Bereich von 0,3 bis 8 µm auf. Bei dem genannten Teilchengrößenbereich handelt es sich um die mittlere Teilchengröße, bestimmt durch Auszählen einer elektronenmikroskopischen Aufnahme, also ein Zahlenmittel.

Bei der Weichphase handelt es sich somit um ein Pfropfmischpolymerisat aus dem(n) Monomeren der Hartmatrix, d.h. insbesondere von Styrol, auf Kautschuk oder aus Gemisch von Kautschuken, z.B. ein Gemisch aus einem elastomeren linearen Styrol-Butadien-Zwei-Blockcopolymeren und Polybutadien.

Als Weichphase ist Polybutadien und dessen Pfropfmischpolymerisat mit Styrol bevorzugt. Besonders geeignet sind Polybutadiene vom medium- oder high-cis-Typ mit Molekulargewichten im Bereich von 70.000 bis 450.000 (Gewichtsmittel). Vorzugsweise werden medium-cis-Polybutadiene mit Molgewichten von 300.000 bis 400.000 eingesetzt.

Als Weichphase ebenfalls gut geeignet ist ein lineares Zweiblockcopolymerisat bzw. dessen Pfropfmischpolymerisat mit Styrol.

Elastomere lineare Zwei-Blockcopolymerisate erhält man durch anionische Polymerisation mit Hilfe von Lithiuminitiatoren. Als vinylaromatische Monomere zum Aufbau des ersten Blockes kommen Styrol und substituierte Styrole in Betracht. Genannt seien Styrol, das bevorzugt alleine verwendet wird, o-, m- und p-Methylstyrol. Der zweite Block des Blockcopolymerisats ist vorzugsweise nur aus Butadien aufgebaut.

Das Zweiblockcopolymerisat kann z.B. einen Blockpolystyrolgehalt von 40 bis 90 Gew.-%, bezogen auf das Blockcopolymerisat, aufweisen (Rest jeweils Butadien). Es handelt sich bei dem genannten Blockcopolymerisat um ein solches mit sogenanntem scharfem Übergang. Es ist z.B. aus A. Echte, Angew. Makr. Chemie 58/59 175 (1977) bekannt, wie derartige Blockcopolymerisate erhalten werden können. Das Blockcopolymersat soll ein mittleres Molekulargewicht (M_{w}) von 100.000 bis 300.000, vorzugsweise von 150.000 bis 250.000, aufweisen.

Falls Gemische aus Polydienen und linearen Blockcopolymerisaten als Kautschuk verwendet werden, berechnet sich der Gesamtpolydienanteil aus dem Anteil z.B. des Polybutadiens und z.B. aus dem Butadienanteil, der in dem Zwei-Blockcopolymerisat enthalten ist. Dieser Gesamtpolydienanteil soll, bezogen auf die Komponente A im Bereich von 2 bis 30 Gew.-%, vorzugsweise 4 bis 15 Gew.-%, liegen.

Als praktisches Beispiel diene das folgende: Eine Mischung aus 8 Gew.-% Styrol-Butadienzweiblockcopolymerisat mit einem Butadiengehalt von 50 Gew.-% und 6 Gew.-% Homo-Polybutadien werden angewendet. Der Gesamtpolybutadienanteil beträgt dann 8 x 0.5 = 4 Gew.-% Polybutadien aus dem Zweiblockcopolymerisat und 6 Gew.-% aus dem Homopolymerisat des Butadiens, so daß der Gesamtpolybutadienanteil 10 Gew.-% ausmacht.

Besonders bevorzugt werden schlagfeste Polystyrolharze, die nach den in der DE-A-17 70 392 beschriebenen Verfahren hergestellt werden, oder solche, die besonders gute Spannungsrißbeständigkeit aufweisen (vgl. DE-A-25 25 019). Auch die Verwendung schlagfesten Polystyrols mit transluzenten Eigenschaften, wie es z.B. in der DE-A-26 13 352 beschrieben ist, ist möglich.

Selbstverständlich kann man aber auch Styrol-Butadienpfropfcopolymere mit niedrigerem Butadienanteil, z.B. unter 40 Gew.-% oder schließlich reines Styrol-Homopolymerisat verwenden. Man kann dann durch einen erhöhten Anteil an Styrol-Butadien-Blockcopolymer ebenfalls noch zu verwendbaren Siegelschichten kommen. Dieser Weg ist aber weniger wirtschaftlich.

Als zweiten Bestandteil - unabhängig von der vorerwähnten Weichphase - enthält die spezielle Komponente A nach DE-A-35 31 036 ein Blockcopolymeres A2 aus Styrol und Butadien. Dieses Blockcopolymer A2 ist aufgebaut aus mindestens einem Block eines vinylaromatischen Monomeren, insbesondere aus der Gruppe von Styrol, α-Methylstyrol, kernalkyliertem Styrol wie p-Methylstyrol oder den Mischungen hieraus und mindestens einem Block aus Butadien oder Isopren oder deren Gemisch.

Das Blockcopolymere kann aus 2 oder 3 Blöcken bestehen, es kann linear oder verzweigt aufgebaut sein. Beispielsweise sind geeignete Produkte und Verfahren zu deren Herstellung beschrieben in: DE-A-10 84 919, DE-A-16 45 406, DE-A-14 20 698, US-A-30 30 364. Verzweigte Produkte sind aus DE-A-19 34 348, DE-A-19 59 922 oder DE-A-25 50 227 bekannt.

Auch Verfahren zur Herstellung verzweigter Blockcopolymerisate sind in den genannten Schriften oder in der DE-A-32 48 746 beschrieben.

Bevorzugt werden Styrol-Isopren-Blockcopolymerisate mit scharfem oder verschmiertem Übergang.

Als Styrol-Isopren-Block-Copolymer kann dabei jedes Blockcopolymere ohne Einschränkung auf seinen Aufbau eingesetzt werden, das nach dem (sog. anionischen) Lösungspolymerisationsverfahren mit einer Alkyl-Lithium-Verbindung als Katalysator erhalten wird. Dabei können sowohl elastomere Styrol-Butadien- und Styrol-Isopren-Blockcopolymere als auch harzartige Styrol-Butadien- und Styrol-Isopren-Blockcopolymere mit einem Dienanteil von 50 Gew.-% verwendet werden. Verwendet man elastomere Styrol-Dien-Blockcopolymere mit einem Dien-Anteil über 50 Gew.-%, so liegt deren Anteil im Gemisch bevorzugt zwischen 20 und 40 Gew.-%, kann jedoch, je nach Anforderungen, auch höher oder niedriger sein.

Harzartige Styrol-Dien-Blockcopolymere A2 mit Styrolgehalten größer als 50 Gew.-%, insbesondere 65 bis 95 Gew.-%, sollen bevorzugt in einer Menge von 40 bis 60 Gew.-% in der erfindungsgemäßen Komponente A enthalten sein.

Der dritte Bestandteil der speziellen Komponente A Sind Gleitmittel (Komponente A3). Als Gleitmittel lassen sich prinzipiell alle niedermolekularen Stoffe verwenden, die in der erforderlichen Menge mit den Komponenten A1 und A2 in der Formmasse verträglich sind. Hierzu zählen z.B. Mineralöle, aromatische oder aliphatische Alkohole oder Ester, wie Dodecylakohol, Butylstearat, Di-Ethylhexa-phthalat usw.

Ferner seien genannt Ethylenoxid-Propylenoxid-Blockcopolymerisate; Microhartwachse; Ethylen-bis-Stearylamid (Acrawachs); Metallseifen, insbesondere der Erdalkalien und des Zinks; Mineralöle auf Basis von insbesondere naphthenischen und paraffinischen Kohlenwasserstoffen (insbesondere die technischen und medizinischen Weißöle); Silikonöle mit Viskositäten im Bereich von 0,5 bis 50.000 mPas.

Als weitere Bestandteile der Komponente A kommen übliche Zusatzstoffe in Frage, z.B. Entformungsmittel, Antistatica, Antioxydantien, Pigmente oder Füllstoffe.

### Komponente B

Die im Bedarfsfall verwendete Komponente B der erfindungsgemäßen siegelfähigen Kunststoff-Folie ist als Träger oder Trägerfolie der heißsiegelfähigen Kunststoff-Folie zu bezeichnen. Als Trägerfolie sind im Prinzip alle thermoplastisch verarbeitbaren Stoffe auf Basis von Styrol und Butadien geeignet, also schlagfestes Polystyrol, Styrol-Butadien-Blockcopolymere, Mischungen aus Styrol-Homopolymerisaten oder Styrol-Butadien-Pfropfcopolymerisaten mit Styrol-Butadien-Blockpolymeren. Auf diesen Stoffen haftet die heißsiegelfähige Schicht ohne Kleber.

Als Komponente B der erfindungsgemäßen siegelfähigen Kunststoff-Folie wird ein hochschlagzähes Polystyrolharz bevorzugt, aufgebaut aus einer Hartmatrix und einer elastomeren Weichphase.

In diesem Fall ist die Hartmatrix aus dem Polymeren eines monovinylaromatischen Monomeren aufgebaut. Die Hartmatrix macht, bezogen auf die Komponente B, 60 bis 95 Gew.-% , vorzugsweise 70 bis 90 Gew.-% aus. Als monovinylaromatisches Monomeres wird insbesondere Styrol verwendet, aber auch substituierte Styrole oder Copolymere von Styrol mit anderen geeigneten Monomeren wie Maleinsäureanhydrid oder Methylmethacrylat sind als Hartmatrix verwendbar.

Die entsprechende Weichphase der Komponente B wird auf die übliche Weise in der Hartmatrix fein dispergiert und ist in einem Anteil von 5 bis 40 Gew.-%, bevorzugt 8 bis 20 Gew.-%, bezogen auf B in der Hartmatrix vorhanden. Sie weist z.B. eine mittlere Teilchengröße im Bereich von 0,3 bis 10 µm auf.

Bei der Weichphase handelt es sich um ein Pfropfmischpolymerisat aus dem bzw. den Monomeren der Hartmatrix, d.h. insbesondere von Styrol auf einen Kautschuk oder ein Gemisch von Kautschuken; Kautschuk kann z.B. ein Gemisch aus einem elastomeren linearen Styrol-Butadien-Zwei-Blockcopolymeren des Typs A-B und Polybutadien sein.

Bevorzugt als Weichphase ist z.B. Polybutadien bzw. dessen Pfropfmischpolymerisat mit vorzugsweise Styrol. Pfropfgrundlage sind allgemein Polymere mit 4 bis 5 C-Atomen; insbesondere Polybutadien vom medium- oder high-cis-Typ mit einem Molekulargewicht im Bereich von 70000 bis 450000 (Gewichtsmittel) sind geeignet. Vorzugsweise wird medium-cis-Polybutadien mit einem Molgewicht von 300000 bis 400000 eingesetzt.

Als Weichphase können weiterhin Styrol-Butadien-Blockcopolymerisate verwendet werden. Diese können allein oder zusätzlich zu den Pfropfmischpolymerisaten eingesetzt werden. Beispiele sind Zwei-Blockcopolymerisate A-B aus einem Styrol-Block A und einem Polybutadienblock B. Das Zweiblockcopolymerisat kann z.B. einen Blockstyrolgehalt von 30 bis 90 Gew.-% aufweisen, der Rest ist Butadien.

Wenn ein Gemisch aus Polydien und linearem Block-Copolymerisat verwendet wird, gilt als Polydien die gesamte Menge aus z.B. Polybutadien und z.B. dem Butadienanteil im Zwei-Blockcopolymerisat. Die Gesamtmenge an Polydien soll, bezogen auf die Komponente B, im Bereich von 4 bis 40 Gew.-%, vorzusweise bei 4 bis 20 Gew.-% liegen.

Als Komponente B besonders bevorzugt wird schlagfestes Polystyrol, das nach dem in der DE-AS 17 70 392 beschriebenen Verfahren hergestellt worden ist.

### Komponente C

Die Komponente C soll hochschmelzend sein und das Kleben der Heißsiegelfolien am Siegelkopf verhindern. Komponente C der Kunststoff-Folien ersetzt aber nicht nur einen Schutzlack, sondern sie erhöht auch in überraschender Weise die Verarbeitungsbreite der siegelfähigen Kunststoff-Folie in einem Maße, daß selbst bei sehr hohen Siegeltemperaturen und Siegelzeiten ein Wegfließen der Trägerschicht verhindert wird und so erst eine störungsfreie Verarbeitung und eine problemlose Anwendung der Heißsiegelfolien ermöglicht wird. Als Komponente C der erfindungsgemäßen heißsiegelfähigen Kunststoff-Folien eignen sich alle thermoplastisch verarbeitbaren Kunststoffe, deren Schmelzpunkt oder Erweichungsbereich oberhalb von 200°C, bevorzugt oberhalb von 230°C liegt. Somit sind als Komponente C z.B. die in der nachstehenden Tabelle aufgeführten Kunststoffe geeignet.

| Kunststoff, übliche Bezeichnung | Chemische Zusammensetzung | Schmelztemperatur |
|---|---|---|
| Polyamid 6 | Polycaprolactam | 220 |
| Polyamid 6.6 | Polyhexamethylenadipinamid | 255 |
| Polyamid copolymerisiert mit Butylenterephthalsäureester | Basis Hexamethylendiamin, Caprolactam, Terephthalsäure | 298 |
| Polybutylenterephthalat | Kondensat aus Terephthalsäure oder Dimethylphthalsäure und 1.4-Butandiol | 220 bis 225 |

Ferner seien genannt: Polyphenylenoxid und dessen Mischungen mit Polystyrol, Polysulfone, Polyethersulfone, Polyetherketone, LC-Polymere, Polyetherimide, kristallines Polyethylenterephthalat, Polyphenylensulfid, Polyamid-Imid-Copolymere oder Polyamide der Struktur von Polyamid 6.12, 11, 4.6 usw., sofern die Schmelztemperatur oder der Erweichungsbereich über 200°C liegt.

### Komponente D

Je nach Art der Komponenten B und C kann zur festen Verbindung der einzelnen Schichten der 3 Komponenten A, B und C ein - bevorzugt thermoplastischer - Kleber oder Haftvermittler (HV) notwendig sein. Für die Verbindung von A mit B sind erfahrungsgemäß dann keine HV notwendig, wenn Komponente B ein nur aus Styrol und Butadien aufgebautes Polymerisat mit unter 15 % weiterer Comonomerer ist. Für die Verbindung der Komponente A mit Polyolefinen haben sich ansonsten Ethylen-Vinylacetat-Copolymerisate mit einem Vinylacetat-Anteil von über 10 % oder Styrol-Butadien-Blockcopolymerisate mit überwiegendem Anteil an Butadien als geeignet erwiesen. Komponente A kann mit Hilfe von Styrol-Maleinsäureanhydrid-Copolymeren mit Polyamid verbunden werden oder mit Hilfe von Styrol-Butadien-Blockcopolymeren mit Polyestern wie Polyethylenterephthalat, Polybutylenterephthalat.

Komponente D der erfindungsgemäßen, heißsiegelfähigen Kunststoff-Folie kann z.B. auch eine weitere, als Gas- oder Wasserdampfsperre eingebaute Schicht aus einem Thermoplasten mit hoher Gas- und/oder Wasserdampfdichte sein. Diese Schicht schützt das Füllgut z.B. vor Austrocknen oder vor Beeinflussung durch Sauerstoff. Beispiele sind Schichten aus Ethylen-Vinylalkohol-Copolymerisaten, die eine hohe Gasdichtigkeit haben oder aus thermoplastisch verarbeitbaren PVDC-Copolymerisaten mit hoher Gas- und Wasserdampfdichte usw. Eine solche Schicht ist wenn nötig ebenfalls mit einem geeigneten Haftvermittler mit den benachbarten Komponenten zu verbinden.

Als Komponente D ist ferner eine eigene, weitgehend lichtundurchlässige oder sonst eingefärbte Schicht möglich, die die Füllgüter etwa vor dem Einfluß von Licht schützt. Zu diesem Zweck versetzt man ein Material z.B. der Komponenten B oder C mit geeigneten Pigmenten, bevorzugt Ruß oder Gemischen von Ruß mit Titandioxid bzw. weiteren Pigmenten und fügt eine zusätzliche, mit Pigmenten versehene Schicht ein; dies ermöglicht eine Haftung ohne HV.

Als weitere Komponenten D sind schließlich möglich z.B. Schichten mit anti-elektrostatischer Ausrüstung, Schichten mit verbesserter Bedruckbarkeit oder verbesserter Kratzfestigkeit, Schichten mit hoher Schlagfestigkeit usw.

Die erfindungsgemäße heißsiegelfähigen Kunststoff-Folie wird bevorzugt nach dem Koextrusionsverfahren hergestellt. Dieses Verfahren ist bekannt. Die Koextrusion kann bei Massetemperaturen zwischen etwa 170°C und 350°C erfolgen. Dabei werden die einzelnen Komponenten A - D in verschiedenen Extrudern aufgeschmolzen und entweder in Mehrfachbreitschlitz- oder Ringdüsen zusammengeführt oder es erfolgt die Zusammenführung der Schicht(en) in einem Adapter.

Daneben besteht auch die Möglichkeit, eine oder mehrere Schichten durch Kaschieren auf die andere(n) extrudierten Schicht(en) aufzubringen.

Bei der Extrusion kann die Dicke der einzelnen Schichten z.B. durch Variation der Extruderdrehzahlen den Anforderungen an die fertigen Folien angepaßt werden.

### Verwendung der heißsiegelfähigen Kunststoff-Folie

Die so entstandenen Heißsiegelfolien werden auf den üblichen, für das Heißsiegeln verwendeten Verschließeinrichtungen auf Behälter aus Styrolpolymerisaten, z.B. aus Styrolhomopolymerisat, Styrol-Butadien-Pfropfpolymerisat oder Blockcopolymerisat bzw. Mischungen aus diesen Stoffen aufgesiegelt. Die Behälter können auch aus anderen Styrolpolymerisaten bestehen, beispielsweise solchen, die einen gewissen Anteil an Copolymeren wie Acrylnitril enthalten. Sehr häufig werden für Verpackungen Mehrschichtfolien verwendet. Auch diese sind geeignet für das Verschließen mit diesen heißsiegelfähigen Kunststoff-Folien unter der Voraussetzung, daß die Innenschicht, auf die der Deckel aufgesiegelt wird, aus einem Styrolpolymerisat besteht, das gegen die Komponente A der heißsiegelfähigen Folie siegelt.

Die Siegelbedingungen sind bei vorgegebener Form des Siegelkopfes durch die Temperatur des Siegelkopfes, den Druck während des Siegelvorgangs und die Siegelzeit beschrieben. Die Siegelbedingungen sind wegen der im Vergleich zu Aluminiumfolien niedrigen Wärmeleitfähigkeit der siegelfähigen Kunststoff-Folie sehr stark von der Dicke der siegelfähigen Kunststoff-Folien abhängig. Beispielsweise kann bei 200°C Siegeltemperatur und 2 bar Siegeldruck eine 0,1 mm dicke Folie schon in 0,2 bis 0,3 sec befriedigend gesiegelt werden, während unter denselben Bedingungen eine 0,25 mm dicke Folie 0,8 bis 1 sec Siegelzeit benötigt.

Geeignete Siegelbedingungen liegen je nach Art der Komponente C der heißsiegelfähigen Kunststoff-Folie bei Drucken von 1 bis 5 bar, Siegeltemperaturen von 140°C bis 280°C und Siegelzeiten von 0,1 bis 2 sec.

### Beispiel 1

Nach dem Verfahren der Koextrusion wird eine siegelfähige Kunststoff-Folie aus folgenden Komponenten hergestellt.
- Komponente A:: siegelfähige Schicht entsprechend der in den Beispielen der DE-OS 35 31 036 verwendeten Mischung.
- Komponente B:: hochschlagfestes Polystyrol mit 8 % Butadienanteil - Vicatzahl 95°C (DIN 53 460, Verfahren A) Meltindex 3 g/10 min nach DIN 53 735, 200°C/5 kg - abgemischt mit 15 % eines StyrolButadien-Zwei-blockcopolymeren mit 72 % Butadien-Anteil.
- Komponente C:: Polyamid 6.6, Schmelzpunkt 260°C, bestimmt nach ISO 1218, Verfahren A.
- Komponente D:: Copolymerisat aus 80 % Ethylen, 10 % Vinylacetat und 10 % Maleinsäureanhydrid, zur Verwendung als Haftvermittler zwischen den Schichten B und C.

Die Komponente B wird durch einen Hauptextruder, die Komponenten A, C und D durch je einen Seitenextruder einer Mehrfach-Breitschlitzdüse zugeführt. Die Verarbeitungstemperaturen der Formmassen waren:
- Komponente A:: 189°C; Komponente B: 210°C; Komponente C: 280°C;
- Komponente D:: 240°C; der Schichtaufbau der Folie war wie folgt:
- Komponente A:: 0,01 mm; Komponente B: 0,23 mm; Komponente C: 0,02 mm;
- Komponente D:: 0,01 mm.

### Beispiele 2 bis 12

Die Beispiele 2 bis 12 wurden auf derselben Anlage produziert und können tabellarisch zusammengefaßt werden (Tabelle 1). Als Komponente A wurde das Material des Beispiels 1 verwendet.

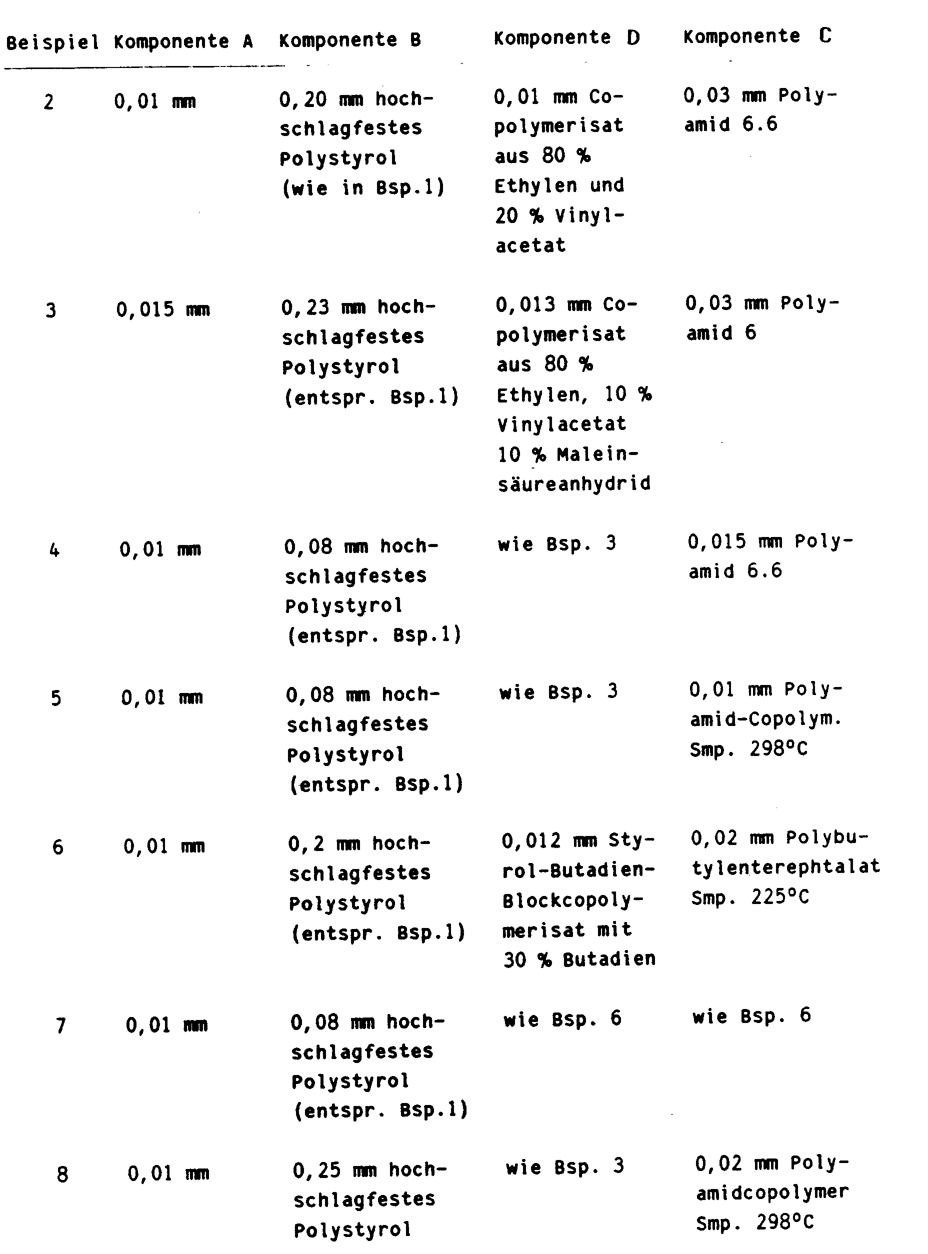

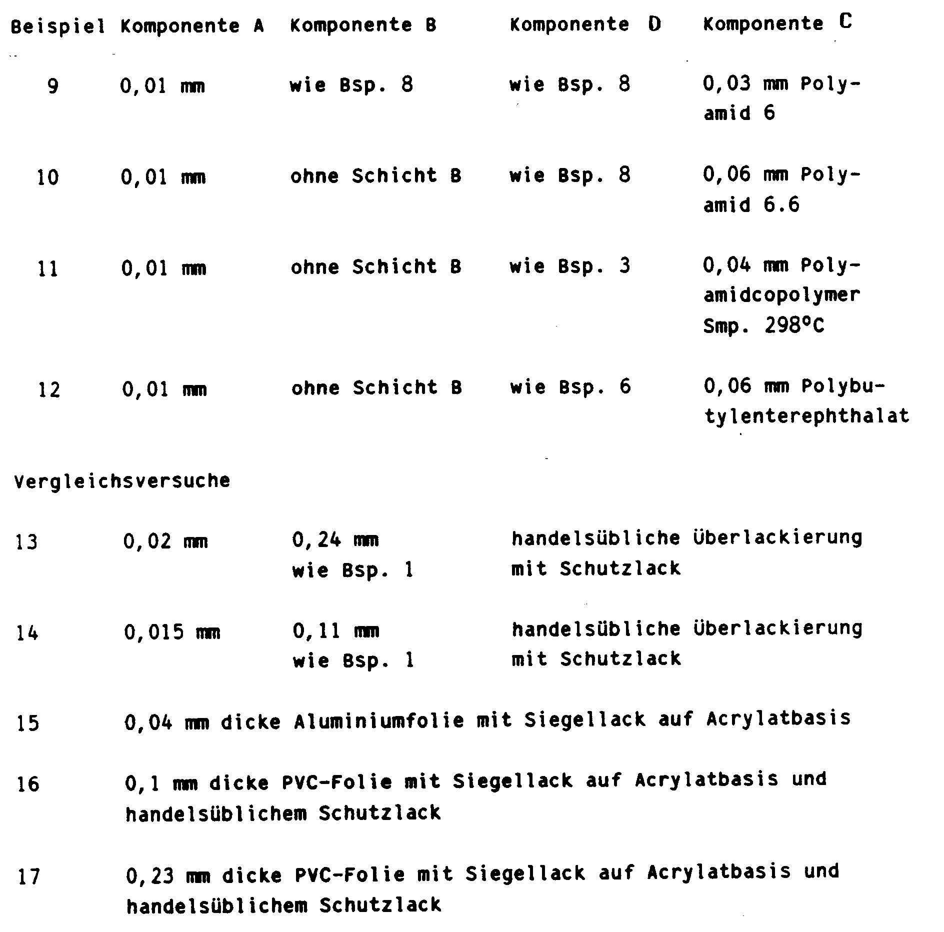

Mit den nach den Beispielen 1 bis 12 hergestellten heißsiegelfähigen Kunststoff-Folie wurden Siegelversuche durchgeführt. Ein Teil der nach den Beispielen 1 bis 12 hergestellten heißsiegelfähigen Folien wurde zusätzlich mit einer temperaturbeständigen Lackschicht überzogen (jeweils die Varianten a), für die Vergleichsversuche 13 bis 14 wurden heißsiegelfähige Kunststoff-Folien entsprechend DE-A-35 31 036, d.h. ohne erfindungsgemäße Komponente C und D, aber mit einer temperaturbeständigen Lackschicht verwendet. Zusätzlich wurden handelsübliche Aluminiumsiegelfolien (Beispiel 15) und handelsübliche Siegelfolien aus PVC (Beispiel 16 und 17) in die Vergleichsversuche einbezogen. Diese waren ebenfalls jeweils mit einer Schutzlackschicht überzogen, sowie mit einem Siegellack auf Acrylatbasis versehen.

Die in den Beispielen und Vergleichsversuchen genannten Parameter wurden wie folgt bestimmt:
1. Siegelbedingungen bei unterschiedlicher Einstellung des Siegelkopfes nach Temperatur (°C), Druck (bar), und Zeit (sec). Die Folien wurden auf handelsübliche thermogeformte Verpackungsbecher aus schlagfestem Polystyrol, Butadiengehalt von 6 %, Vicatzahl 90°C (DIN 53 460, Verfahren A), Meltindex 4 g/10 min (MFI: 200°C/5 nach DIN 53 735) aufgesiegelt.
2. Bestimmung des Berstdruckes
   Unter verschiedenen Siegelbedingungen wurden Verpackungsbecher verschlossen. Zur Bestimmung der Festigkeit der Siegelverbindung wurde ein Berstdrucktest durchgeführt. Dazu wurde mit Hilfe einer geeigneten Vorrichtung durch Druckluft ein meßbarer Überdruck in dem verschlossenen Behälter erzeugt. Die Apparatur besteht im wesentlichen aus einem Manometer mit Schleppzeiger und einer Druckluftleitung, die mittels einer Gummidichtung an eine im Becher angebrachte Öffnung angeschlossen sind. Der Druck wurde so lange gesteigert, bis sich die Siegelnaht öffnete. Das höchste erreichte Druck wird als Berstdruck bezeichnet.
3. Bestimmung der Fallhöhe
   Verpackungsbecher genormter Abmessung wurden mit Wasser gefüllt und unter verschiedenen Bedingungen versiegelt. Die maximale Fallhöhe in cm bis zum Aufplatzen der Siegelung wurde bestimmt.
4. Bestimmung der Abschälfestigkeit vom Becher
   Verpackungsbecher wurden unter verschiedenen Bedingungen versiegelt und mit einer speziell angefertigten Vorrichtung die Abschälfestigkeit der Siegelfolie vom Becher bestimmt. Dazu wurden die Becher auf den Tisch einer Universal-Druck- und Zugmaschine gestellt und festgelegt. Eine vorstehende Ecke des aufgesiegelten Deckels wurde gefaßt und über eine Verlängerung mit der oberen Spannbacke der Prüfmaschine verbunden.
   Mit einer Beanspruchungsgeschwindigkeit von 10 mm/mm wurde die Kraft aufgebaut und der Deckel abgezogen. Festgehalten wurde die Kraft in [N] bis zum ersten Anriß und die Weiterreißkraft an der Siegelnaht in der Deckelmitte.

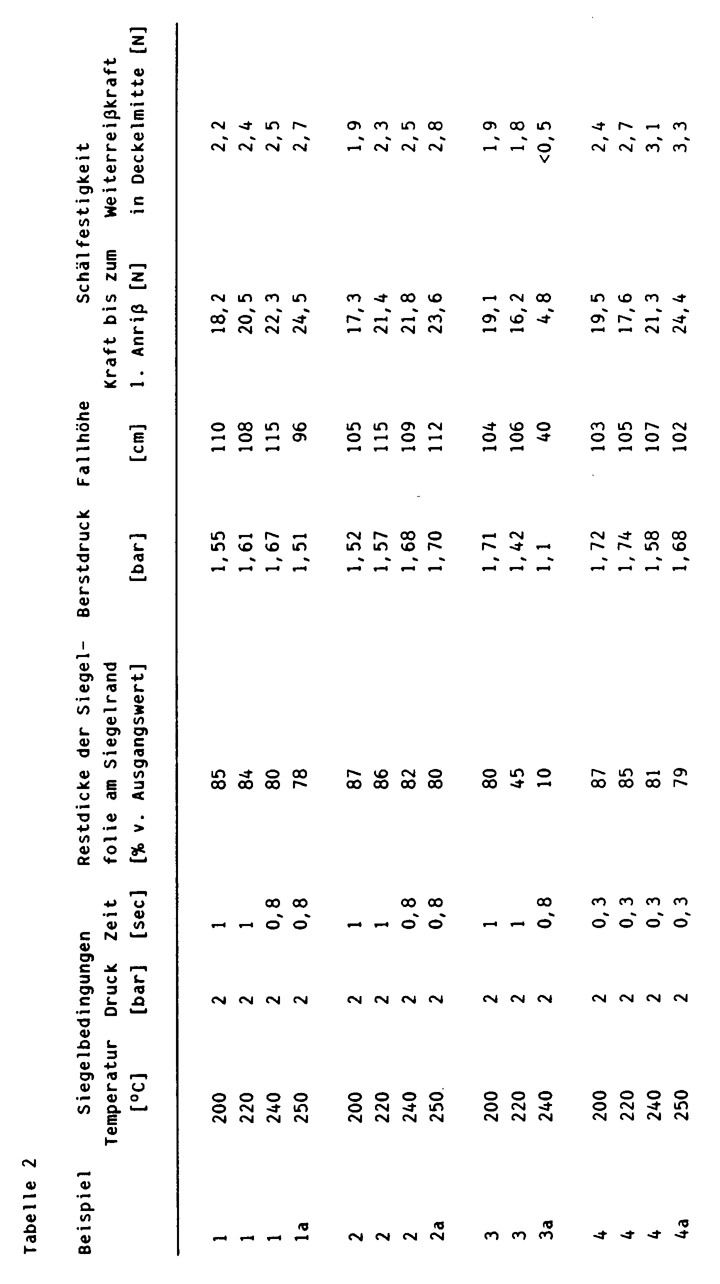

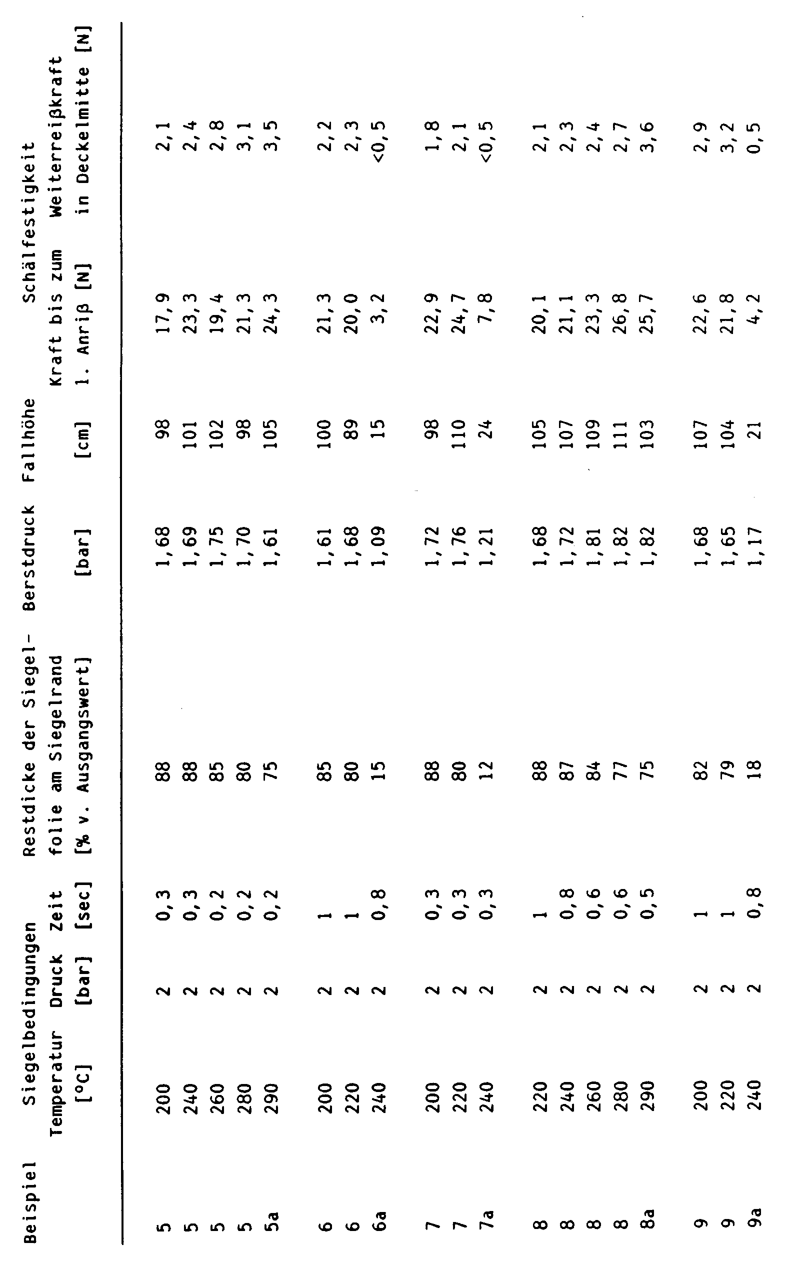

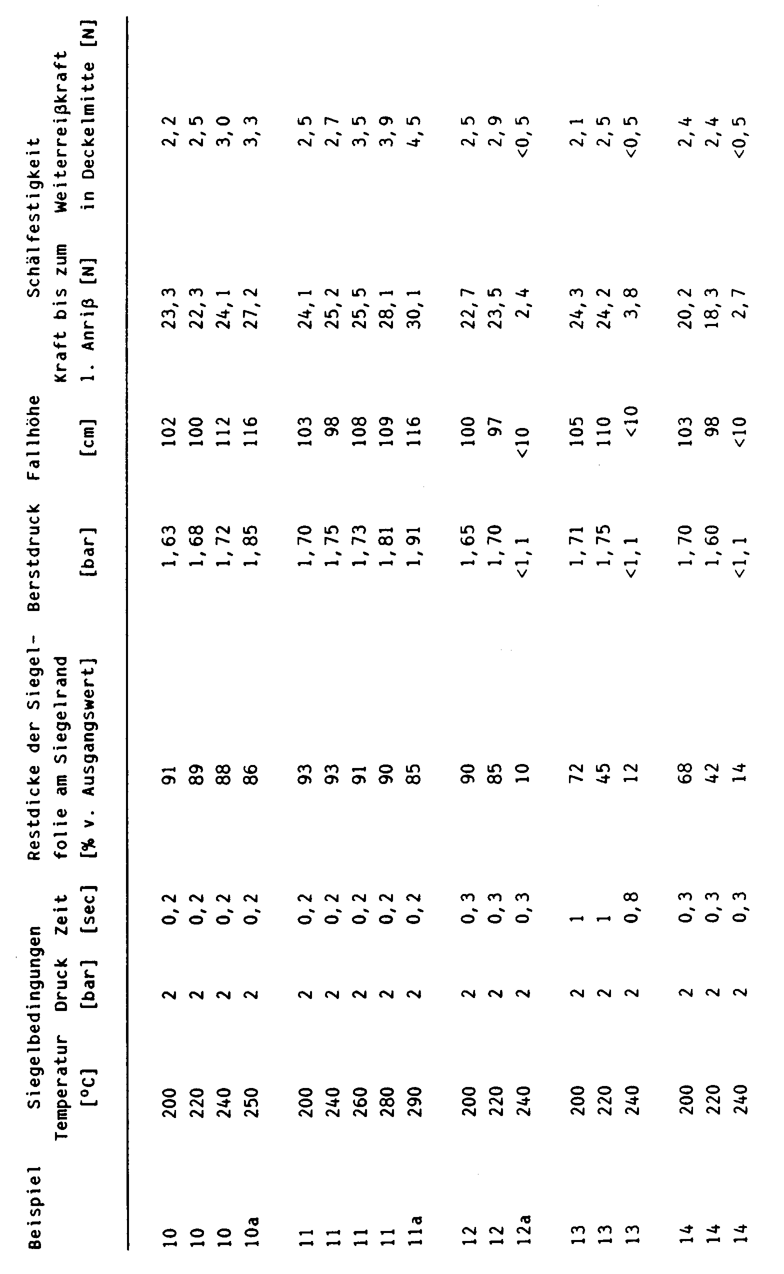

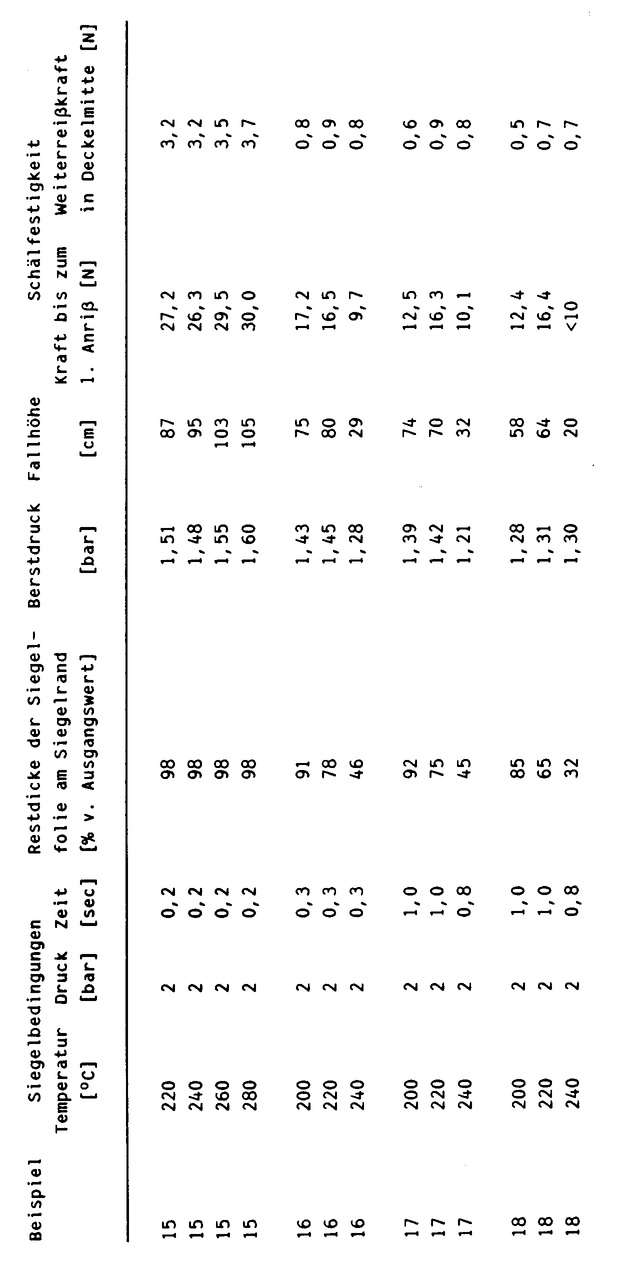

## Patentansprüche

1. Siegelfähige Kunststoff-Folie, hergestellt nach dem Koextrusionsverfahren oder durch Kaschieren, aus mindestens zwei Schichten A und C sowie eventuell einer Trägerschicht B aus
A: 1 bis 50 % einer Schicht aus einem heißsiegelfähigen schlagzähen Polystyrol A aus - bezogen auf A -
A1: 20 bis 80 Gew.-% eines schlagzähen Polystyrols A1,
A2: 5 bis 70 Gew.-% mindestens eines Styrol-Butadien-Blockcopolymeren A2 und
A3: 8 bis 30 Gew.-% mindestens eines Gleitmittels A3,
B: 0 bis 95 % einer Trägerschicht B aus thermoplastisch verarbeitbaren Stoffen auf Basis von Styrol und Butadien,
C: 1 bis 99 % einer von B verschiedenen, oberhalb von 200°C schmelzenden Kunststoffschicht C,
wobei die Prozentzahlen von A, gegebenenfalls B und C sich auf die Materialstärke oder das Gewicht von A, B bzw. C beziehen und ihre Summe 100 ist.

2. Kunststoff-Folie nach Anspruch 1 aus zwei Schichten A und C sowie einer weiteren Schicht D, die als Haftvermittler zwischen A und C dient.

3. Kunststoff-Folie nach Anspruch 1 aus drei Schichten A, B und C sowie mindestens einer weiteren Schicht D, die als Haftvermittler zwischen A und B und/oder B und C dient.

4. Kunststoff-Folie nach Anspruch 1 aus
3 bis 30 % A, 8 bis 90 % B und 3 bis 20 % C.

5. Verwendung der Folie nach einem der Ansprüche 1 bis 4 zur Herstellung heißsiegelfähiger Kunststoffteile.

## Claims

1. A heat-sealable plastic film produced by the coextrusion process or by lamination from at least two layers A and C and, if desired, a base layer B, comprising
A: from 1 to 50% of a layer of a heat-sealable, high-impact polystyrene A comprising - based on A -
A1: from 20 to 80% by weight of a high-impact polystyrene A1,
A2: from 5 to 70% by weight of at least one styrenebutadiene block copolymer A2 and
A3: from 8 to 30% by weight of at least one lubricant A3,
B: from 0 to 95% of a base layer B comprising thermo-plastically processable substances based on styrene and butadiene,
C: from 1 to 99% of a plastic layer C which is different from B and melts above 200°C,
where the percentages of A, B, if used, and C are based on the material thickness or the weight of A, B and C, and their sum is 100.

2. A plastic film as claimed in claim 1 comprising two layers A and C and a further layer D which serves as adhesion promoter between A and C.

3. A plastic film as claimed in claim 1 comprising three layers A, B and C and at least one further layer D which serves as adhesion promoter between A and B and/or B and C.

4. A plastic film as claimed in claim 1 comprising from 3 to 30% of A, from 8 to 90% of B and from 3 to 20% of C.

5. The use of a film as claimed in one of claims 1 to 4 for the production of heat-sealable plastic parts.

## Revendications

1. Feuille plastique scellable fabriquée conformément au procédé de coextrusion ou par contrecollage, constituée par au moins deux couches A et C et éventuellement par une couche de support B constituées par
A: à concurrence de 1 à 50%, une couche constituée par un polystyrène A thermosoudable résistant aux chocs constitué par - rapportés à A,
A1: de 20 à 80% en poids d'un polystyrène A1 résistant aux chocs,
A2: de 5 à 70% en poids d'au moins un copolymère séquencé de styrène-butadiène A2 et
A3: de 8 à 30% en poids d'au moins un agent de glissement A3,
B: à concurrence de 0 à 95%, une couche de support B constituée par des matières aptes à un traitement thermoplastique à base de styrène et de butadiène
C: à concurrence de 1 à 99%, une couche en matière synthétique C différente de B, dont le point de fusion est supérieur à 200°C,
les quantités en pour cent de A, éventuellement de B, et de C se rapportant à l'épaisseur de matière ou au poids de A, B, respectivement C, et leur somme étant égale à 100.

2. Feuille plastique selon la revendication 1, constituée par deux couches A et C, ainsi que par une couche supplémentaire D qui sert d'adhésif entre A et C.

3. Feuille plastique selon la revendication 1, constituée par trois couches A, B et C et par au moins une couche supplémentaire D qui sert d'adhésif entre A et B et/ou entre B et C.

4. Feuille plastique selon la revendication 1, constituée par A à concurrence de 3 à 30%, par B à concurrence de 8 à 90% et par C à concurrence de 3 à 20%.

5. Utilisation de la feuille selon l'une quelconque des revendications 1 à 4, pour la préparation d'éléments en matières synthétiques thermosoudables.
